# EUROPEAN PATENT SPECIFICATION

(11) **EP 0 796 509 B1**
(45) Date of publication and mention of the grant of the patent: **28.04.1999**
(21) Application number: 95938076.7
(22) Date of filing: 19.10.1995
(51) Int. Cl.: H01M 4/62, H01M 4/32, H01M 4/24, H01M 4/26

(54) **METHOD OF MANUFACTURING A BATTERY ELECTRODE**
VERFAHREN ZUR HERSTELLUNG EINER BATTERIEELEKTRODE
PROCEDE DE PREPARATION D'UNE ELECTRODE POUR UNE CELLULE ELECTROCHIMIQUE

(30) Priority: 29.11.1994 RU 94042552
(43) Date of publication of application: 24.09.1997
(73) Proprietor: AKTSIONERNOE OBSCHESTVO "ELIT", 305013 (RU); Aktsionernoe Obschestvo Zakrytogo Tipa "Esma", Moscow (RU)
(72) Inventor: BRIKEZ, Alexandr Mikhailovich, Kursk, 305013 (RU)
(74) Representative: Beetz & Partner Patentanwälte
(86) International application number: PCT/RU95/00222
(87) International publication number: WO 96/17393

(56) References cited:
- EP-A- 0 603 397
- FR-A- 2 415 882
- US-A- 3 954 506
- US-A- 5 262 255
- PATENT ABSTRACTS OF JAPAN vol. 011 no. 088 (E-490) ,18 March 1987 & JP,A,61 240579 (JAPAN STORAGE BATTERY CO LTD) 25 October 1986,
- PATENT ABSTRACTS OF JAPAN vol. 010 no. 268 (E-436) ,12 September 1986 & JP,A,61 091871 (TOPPAN PRINTING CO LTD;OTHERS: 01) 9 May 1986,

## Description

### TECHNICAL FIELD

The present invention relates to electrical industry, in particular to the manufacture of nickel-cadmium, nickel-hydride and other alkaline accumulators and can be used in the production of primary current generator cells.

### BACKGROUND ART

There has been known a process for manufacturing a battery electrode, comprising the steps of mixing active material with a binder, applying a mixture so obtained to the lead and drying (see Japanese patent application No. 17545/71, Cl. 57C 2, 1971).

Of the major drawbacks of said process is limitedness of its realization as to the use of more efficient methods for applying an active mass to the lead with the exception of a method for smearing. This is caused by the fact that, when using other methods of application, namely milling and pressing, which allow preparation of electrodes with higher capacities per unit weight, a wet mixture of active mass will be squeezed out. In addition to the above problem, when drying an active mass of a smeared electrode, its warping is unavoidable, so that an additional process for milling becomes necessary to straighten said electrode. Drying requires a complete hardening of a binder. As a result, when milling dried electrodes, destruction of the electrode skeleton structure formed from a polymeric binder takes place, which results in the decrease of electrode strength and flexibility, contact break between separate particles of active material leading to the decrease of capacitive characteristics of such electrode.

The closest prior art dealing with processes for making electrodes of the same purpose has been described in a method for manufacturing a battery electrode, comprising the steps of mixing an active material with a binder, applying a mixture so obtained to the lead and drying (see French Patent No. 2415882, Int. Cl. H01M 4/32, 1979).

Reasons preventing from the achievement of a required technical result when using the above method reside in impossibility, during one main stage (milling, pressing), to obtain an electrode with predetermined weight characteristics due to an intense creep of the paste. When applying the paste onto a current collector used to realize the said method, additional means (porous bands, cords, etc.) for dehydrating and keeping clear of the paste to operating parts are required, which results in a considerable complication of the manufacturing process.

Moreover, electrodes made by the said method using a tentative binder possess a limited flexibility which narrows a spectrum of applicability of, for example, small-scale cylindrical primary current generator cells due to the electrode cracking when coiling.

US, A, 5 262 255 to ITO et al. discloses a method of making a battery electrode wherein acetylene black as a conductive material, an active material (Al or Al alloy) is mixed with a binder, such as styrene-ethylene-butylene-styrene co-polymer (SEBS), polybutadiene(BR), acrylonitrile-butadiene co-polymer(NBR) and methyl methacrylate-butadiene co-polymer(MBR) in the form of a solution or a dispersion. The mixture is mulled into a paste from which negative electrodes are prepared.

Patent abstracts of Japan vol. 011 no. 088 (E-490), 18 March 1987, & JP, A, 61 240 579 disclose a method of manufacturing a plate for a cadmium alkaline storage battery having improved active material utilization, mechanical strength, and oxygen gas absorbing ability. The method is characterized by using a polymer latex together with an organic polymer soluble in an alkaline solution as a binder. A latex of thermoplastic organic synthetic resin (polymer latex) and water soluble organic polymer soluble in an alkaline electrolyte are jointly used as a binder when a paste type negative plate is manufactured. Acryl-styrene, acryl-styrene-butadiene, or vinyl chloride-vinyl acetate are used as the polymer latex.

### SUMMARY OF THE PRESENT INVENTION

The present invention is made in order to solve the above problems included in the prior arts, and an object of this invention is to provide a new method of manufacturing a battery electrode which, as compared to previously known methods of the same purpose, allows simplification of the manufacturing process and improvement in mechanical strength of the electrode.

A technical result attainable when realizing the present invention resides in the simplification of manufacturing process by reducing a number of equipment required to implement the process and separating the stages of drying and direct manufacturing of a finished electrode, that is to say, drying itself does not predetermine a direct manufacture time, while the stock of active mass with a given end moisture content which does not affect electrochemical and gravimetric characteristics of the electrode allows flexible use of the aforementioned time, as well as the improvement in mechanical strength of the electrode due to the decrease in its brittleness and cracking when coiling for small-scale cylindrical primary current generator cells.

The above technical result is achieved in accordance with the present invention by the fact that in the known method of manufacturing a battery electrode, comprising the steps of mixing an active material with a binder, applying a mixture so obtained to a lead, and drying, an aqueous dispersion of methyl methacrylate - butadiene copolymer is used as said binder in the following ratio of constituents (in parts by mass):

| | |
|---|---|
| active material | 100 |
| aqueous dispersion of methyl methacrylate - butadiene copolymer | 2.4 - 24 |
| water | 10 - 40 |

and wherein said drying is carried out up to a residual moisture of 1.0 - 3.5 %.

The present process provides for the broadening of technological capabilities as to the use of different methods for applying an active mass to the lead and allows an improved flexibility of the electrode (without destruction of the substrate) by using a new binder with a corresponding ratio of constituents and drying a mixture to a certain residual moisture.

### BEST MODE FOR CARRYING OUT THE INVENTION

The present process is carried out as follows:

To prepare an electrode, 100 parts of active material is mixed with 2.4 - 24 parts of a binder. As the binder, an aqueous dispersion of methyl methacrylate - butadiene copolymer (synthetic latex DMMA-65 ΓΠ (ΓK)) (DMMA-65 GP (GK)) predissolved in water is used, wherein said latex amounts to 2 % - 10 % by weight of a dry substance.

Latex is used in a concentration of 37 % - 41 %, since its aggregative stability decreases and its viscosity increases when rising the concentration. While mixing, 10 - 40 parts of water is added. Thereupon, drying of the mixture so obtained is carried out up to a residual moisture of 1.0 % - 3.5 % and said mixture is applied to the lead.

Strength and flexibility of electrodes obtained are due to an optimal relationship of physical parameters and properties of a binder employed, since a physical action (milling, pressing) with respect to active mass is performed at the stage of gelling the binder (with a residual moisture), that is to say, at the moment when latex has highest adhesion properties, while in the process of applying a paste removal of moisture residues takes place and the molecular bond strengthens. Porosity of finished electrodes is explained by polydispersity of latex (the presense of particles ranging 0.1 to 50 µm), which leads to the formation of a heterogeneous structure (a film on the active mass constituents) with a loose packing of latex particles in which discrete large particles are separated by spaces commensurable with their dimensions or exceeding thereof. A porous space-skeleton hydrophilic lattice is so formed, which lattice does not induce diffusion difficulties.

### EXAMPLE OF A SPECIFIC EMBODIMENT

### EXAMPLE 1

A conducting acetylene black in the amount of 2.5 % is added to a powder of hydrogen absorbing alloy (HAA) used for negative electrode of a nickel-metal hydride battery (it is also possible to avoid said black, since available metals and their hydrides possess electric conductivity which is greater by a factor of 10²-10³ than that of said black). A solution of 41 % aqueous dispersion of methyl methacrylate - butadiene copolymer (synthetic latex DMMA-65 ΓΠ (ΓK)) (DMMA-65 GP (GK)) is prepared separately. Latex is diluted with distilled water in a volume ratio of 1:1. 12.2 g of this 41 % latex is taken up per 100 g of alloy which affords preparation of 5 % content of a dry copolymer residue in active mass. Then, latex is diluted with 12 ml of water. While stirring (n = 500 - 800 rpm), a diluted latex is introduced into a dry mixture followed by addition of 1/2 volume of water (based on the amount introduced earlier, i.e., 12/2 = 6 g per 100 g alloy) and the mixture obtained is stirred for 20 min. Under these conditions and with the abovementioned percentage, a finished active mass after stirring has a "luxuriant" consistency. Thereupon, said finished mass is dried on a desiccator tray at 80 C to a 2.5 % residual moisture in active mass, after which said finished active mass is milled to a nickel stretching strip with a 0.1 mm thickness. A belt formed is flexible and strong, it withstands bending of radius 5 mm without cracks and fractures. The belt thickness is varied from 0.6 mm to 0.9 mm. Then the belt is cut into electrodes of required sizes, after which a lead is welded to the belt and used for assembly of batteries.

### EXAMPLE 2

Under conditions of Example 1, an aqueous dispersion of methyl methacrylate - butadiene copolymer is taken up in the amount of 2.2 wt. parts and drying is carried out to a 0.9 % residual moisture in active mass. The belt formed is strong but thicker (with the same roll nips): 0.75 to 1.0, and stiff; it cracks when coiling.

### EXAMPLE 3

Under conditions of Example 1, an aqueous dispersion of methyl methacrylate - butadiene copolymer is taken up in the amount of 2.4 wt. parts and drying is carried out to a 1.0 % residual moisture in active mass. The belt formed is even, smooth, with a good flexibility.

### EXAMPLE 4

Under conditions of Example 1, an aqueous dispersion of methyl methacrylate - butadiene copolymer is taken up in the amount of 24.0 wt. parts and drying is carried out to a 4.0 % residual moisture in active mass. The belt formed is of satisfactory thickness, strong, with a good flexibility.

### EXAMPLE 5

Under conditions of Example 1, an aqueous dispersion of methyl methacrylate - butadiene copolymer is taken up in the amount of 24.1 wt. parts and drying is carried out to a 4.1 % residual moisture in active mass. Said active mass (with the same roll nips) is milled poorly, the belt travels with passes, adhering of the mass to rolls takes place. The belt formed is of a satisfactory strength in the presence of rather large roll nips. The substrate is thick and brittle.

Active masses were also produced for positive and negative electrodes of nickel-cadmium batteries.

For positive electrodes, a mass consisting of nickel hydroxide, graphite (or without thereof), carbonyl nickel (used in batch production) and the present latex within a range of 2 to 10 weigth percent based on the dry substance (2.4 to 24.0 wt. parts) was employed.

When producing a positive active mass lacking graphite, a carbonyl nickel powder within a range of 20 to 60 wt. parts per 100 parts of nickel hydroxide was used as a conducting constituent.

The same amount of latex was introduced into a negative mass consisting of cadmium oxide and different stabilizers (used in batch production).

In all the abovementioned examples, highly reproducible technological characteristics were achieved which are presented in Table 1.

**Table 1**

| Parameters | | Results achievable | Remarks |
|---|---|---|---|
| Binder content in active mass | | | |
| Aqueous dispersion in mixing, wt. parts | Copolymer after drying, % | | |
| 1 | 2 | 3 | 4 |
| 2.2 | 0.9 | The belt is more tick, stiff, easy to break when coiling | |
| | | | |
| 2.4 | 1.0 | The belt is even, smooth, with a good flexibility | |
| | | | |
| 3.7 | 1.5 | the same | |
| | | | |
| 4.8 | 2.0 | the same | |
| | | | |
| 7.3 | 3.0 | the same | |
| | | | |
| 12.2 | 5.0 | Good thickness (0.8 to 0.9 mm) and flexibility | |
| | | | |
| 17.0 | 7.0 | Thickness is less than 0.6 mm, good flexibility | Without black, it is possible to prepare 0.5 mm electrode |
| 24.0 | 9.8 | Satisfactory thickness, good flexibility | |
| | | | |
| 24.1 | 10.0 | Capacity per unit weight is lowered significantly, active mass is poorly milled, adheres to rolls. The substrate is thick and brittle. | |

| Residual moisture in active mass, % | | | |
|---|---|---|---|
| 0.9 | | The belt is brittle | |
| | | | |
| 1.0 | | Good belt flexibility | |
| | | | |
| 2.0 | | Good flexibility, the belt is more thin | |
| | | | |
| 3.0-3.5 | | Good flexibility, a minimal belt thickness | |
| | | | |
| 4.0 | | Satisfactory thickness, good flexibility | |
| | | | |
| 4.1 | | Active mass adheres to rolls. The belt is thick and brittle. | |

The method in accordance with the present invention allows manufacture of electrodes for current generator cells of both polarities with highly reproducible voltage-current and technological characteristics; it can also be used to manufacture substrates for cermet electrodes and electrodes for primary current generator cells.

## Claims

1. A method of manufacturing a battery electrode, comprising the steps of:
- mixing an active material with a binder
and
- drying the mixture obtained and applying it to a lead,
wherein
- as said binder an aqueous dispersion of methyl methacrylate/butadiene copolymer is used, the ratio of constituents being as follows (in parts by mass):
| | |
|---|---|
| active material | 100 |
| aqueous dispersion of methyl methacrylate butadiene copolymer | 2.4 to 24 |
| water | 10 to 40 |
and
- said drying is carried out up to a residual moisture of 1.0 to 3.5 %.

## Patentansprüche

1. Verfahren zur Herstellung einer Batterieelektrode, das die folgenden Schritte umfaßt:
- Mischen eines aktiven Materials mit einem Bindemittel und
- Trocknen des so erhaltenen Gemisches und Aufbringen desselben auf einen Leiter, wobei
- als Bindemittel eine waßrige Dispersion von Methylmethacrylat-Butadien-Copolymer verwendet wird und das Verhältnis der Bestandteile wie folgt ist:
| | |
|---|---|
| aktives Material | 100 |
| wäßrige Dispersion von Methyl-methacrylat-Butadien-Copolymer | 2,4 bis 24 |
| Wasser | 10 bis 40 |
und
- das Trocknen bis zu einer Restfeuchtigkeit von 1,0 bis 3,5 % erfolgt.

## Revendications

1. Une méthode de fabrication d'une électrode de batterie, comprenant les étapes de :
- mélange d'une substance active avec un liant; et
- séchage du mélange obtenu et application de celui-ci sur un conducteur, dans lequel :
- en tant que dit liant, on utilise une dispersion aqueuse d'un copolymère méthacrylate de méthyle/butadiène, le rapport des constituants étant le suivant :
- substance active 100
- dispersion aqueuse de copolymère méthacrylate de méthyle/butadiène 2,4 à 24
- eau 10 à 40
- ledit séchage est effectué jusqu'à ce qu'on obtienne une teneur résiduaire en humidité de 1,0 à 3,5 %.
